# EUROPEAN PATENT SPECIFICATION

(11) **EP 3 693 248 B1**
(45) Date of publication and mention of the grant of the patent: **19.10.2022**
(21) Application number: 20155383.1
(22) Date of filing: 04.02.2020
(51) Int. Cl.: B62D 1/20, F16J 15/02

(54) **HOLE COVER AND STEERING SYSTEM INCLUDING THE SAME**
LOCHABDECKUNG UND LENKSYSTEM DAMIT
COUVERCLE DE TROU ET SYSTÈME DE DIRECTION LE COMPRENANT

(30) Priority: 06.02.2019 JP 2019019432
(43) Date of publication of application: 12.08.2020
(73) Proprietor: JTEKT CORPORATION, Aichi-ken, 448-8652 (JP)
(72) Inventor: TAKAI, Kenta, Osaka-shi, Osaka 542-8502 (JP)
(74) Representative: Winter, Brandl - Partnerschaft mbB

(56) References cited:
- EP-A1- 3 293 074

## Description

### BACKGROUND OF THE INVENTION

### 1. Field of the Invention

The present invention relates to a hole cover and a steering system including the hole cover.

### 2. Description of Related Art

Hitherto, as a steering system for a vehicle, there is a steering system configured to change a steered angle of each steered wheel by converting rotation along with a steering operation into reciprocating linear motion of a rack shaft by a rack and pinion mechanism. The steering system is fastened to suspension members of the vehicle with bolts or the like. Therefore, the steering system is mounted on the vehicle in a state in which a rack housing is pressed against a dash panel from its outer side by a predetermined load. In this manner, the steering system is provided outside a cabin, and therefore foreign matter such as rain water or dust is likely to adhere to the steering system.

In view of the above, for example, Japanese Unexamined Patent Application Publication No. 2018-43551 (JP 2018-43551 A), having family member EP 3 293 074 A1, discloses the subject-matter of the preamble of claim 1, and discloses a steering system including a hole cover fitted to a tubular portion of the rack housing, which houses a pinion shaft. The hole cover includes a fitting member fitted to the tubular portion, and a seal member interposed between the tubular portion and the fitting member in an axial direction. When the steering system is mounted on the vehicle, the rack housing is pressed against the dash panel via the hole cover by the predetermined load to compress the seal member in the axial direction, thereby sealing a part between the tubular portion and the fitting member. Thus, foreign matter is prevented from entering the rack housing.

### SUMMARY OF THE INVENTION

In the structure of JP 2018-43551 A, the seal member is interposed between the fitting member and the tubular portion in the axial direction while being disposed radially inward of the fitting member. Therefore, it is difficult to check whether the seal member is properly attached in the state in which the fitting member of the hole cover is fitted to the tubular portion of the rack housing.

The present invention provides a hole cover that can facilitate a check on whether a seal member is properly attached, and provides a steering system including the hole cover. The invention is defined by the subject-matter of claim 1. Advantageous further developments are subject-matter of the dependent claims (an additional aspect of the invention is the subject of claim 6).

A first aspect of the present invention relates to a hole cover including a tubular fitting member and an annular seal member. The tubular fitting member is fitted to a tubular portion of a rack housing, which houses a pinion shaft such that the pinion shaft partially protrudes from the tubular portion. The annular seal member is disposed radially inward of the tubular fitting member. The tubular fitting member includes a cover-side fitting portion, a cover-side interposing portion, and a covering portion. The cover-side fitting portion is fitted to an outer periphery of a tubular housing-side fitting portion provided on the tubular portion. The cover-side interposing portion is configured to interpose the annular seal member in an axial direction between the cover-side interposing portion and a housing-side interposing portion provided on the tubular portion. The covering portion covers an outer periphery of the annular seal member. The covering portion is provided with an opening passing in and out through the covering portion, and the opening is provided so that the annular seal member is exposed to an outside in a state in which the fitting of the tubular fitting member to the tubular portion is completed when a fitting length, which is a length of a part of the cover-side fitting portion that is fitted to the tubular housing-side fitting portion, is a predetermined fitting length and in a state in which the rack housing is not mounted on a vehicle.

According to the structure described above, the seal member is visible from the outside through the opening in the state in which the tubular fitting member of the hole cover is fitted to the tubular portion of the rack housing before a steering system is mounted on the vehicle. Therefore, it is possible to easily check whether the seal member is properly attached.

In the aspect described above, the opening may be provided so that the annular seal member is hidden by an inner periphery of the covering portion in a state in which the rack housing to which the hole cover is attached is mounted on the vehicle and is pressed against a dash panel of the vehicle through the tubular fitting member by a predetermined load.

According to the structure described above, the seal member is not exposed to the outside through the opening after the steering system is mounted on the vehicle. Thus, the sealing performance can be improved by suppressing direct adhesion of foreign matter such as rain water or dust to the seal member through the opening.

In the aspect described above, the tubular fitting member may include an arm extending in the axial direction from the covering portion. A claw engageable with an engaged portion provided on the tubular portion may be provided at a distal end of the arm. The claw may engage with the engaged portion in the state in which the fitting of the tubular fitting member to the tubular portion is completed and in the state in which the rack housing is not mounted on the vehicle.

According to the structure described above, the claw engages with the engaged portion of the rack housing in the state in which the fitting of the tubular fitting member to the tubular portion is completed. Therefore, it is possible to reduce the occurrence of a case where the hole cover detaches from the rack housing, for example, during transportation of the rack housing to which the hole cover is attached.

In the aspect described above, the opening may be provided adjacent to the arm in a circumferential direction. According to the structure described above, a part of the covering portion near the root of the arm is easily deflected unlike, for example, a case where the opening is provided away from the arm. That is, an apparent axial length of the arm increases, and therefore the arm can easily be deflected when the tubular fitting member is fitted to the tubular portion. Thus, easiness of attachment of the hole cover can be improved.

In the aspect described above, a plurality of the openings may be provided at intervals in a circumferential direction. According to the structure described above, a plurality of parts of the seal member are visible. Thus, it is possible to more accurately check whether the seal member is properly attached.

A second aspect of the present invention relates to a steering system including a rack housing and the hole cover of the aspect described above. The rack housing includes a tubular portion, which houses a pinion shaft such that the pinion shaft partially protrudes from the tubular portion. The hole cover is fitted to the tubular portion. The steering system is mounted on a vehicle in a state in which the rack housing is pressed against a dash panel of the vehicle through the tubular 1 fitting member by a predetermined load.

According to the present invention, it is possible to easily check whether the seal member is properly attached.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic structural view of a steering system;
FIG. 2 is an exploded perspective view of a fitting part between a tubular portion of a rack housing and a hole cover;
FIG. 3 is a sectional view of the fitting part between the tubular portion of the rack housing and the hole cover before the steering system is mounted on a vehicle;
FIG. 4A is a side view of the fitting part between the tubular portion of the rack housing and the hole cover before the steering system is mounted on the vehicle; and
FIG. 4B is a side view of the fitting part between the tubular portion of the rack housing and the hole cover after the steering system is mounted on the vehicle.

### DETAILED DESCRIPTION OF EMBODIMENTS

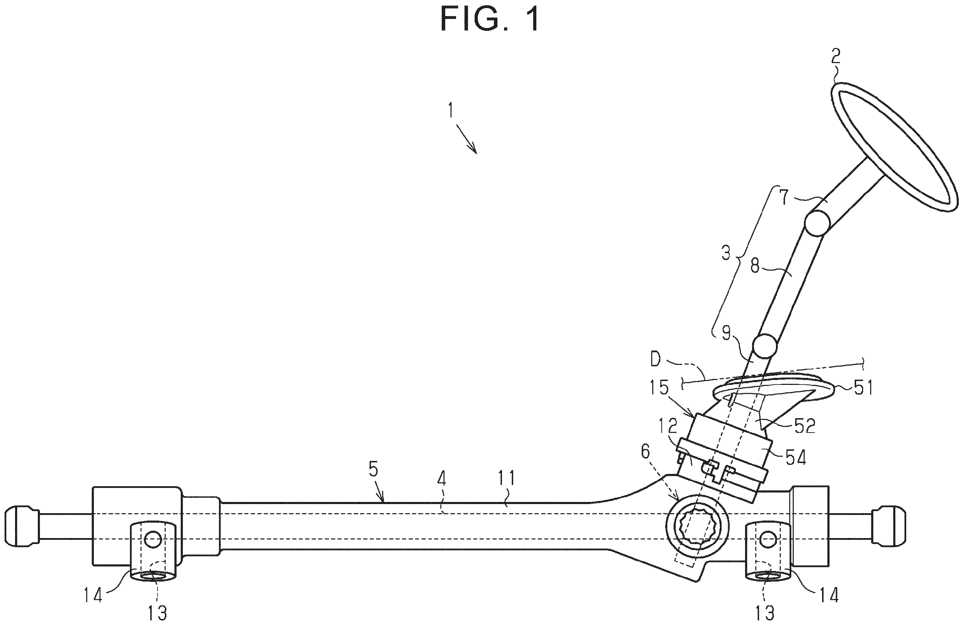

A hole cover and a steering system including the hole cover according to one embodiment are described below with reference to the drawings. As illustrated in FIG. 1, a steering system 1 includes a steering shaft 3, a rack shaft 4, a rack housing 5, and a rack and pinion mechanism 6. A steering wheel 2 is fixed to the steering shaft 3. The rack shaft 4 is coupled to the steering shaft 3. The rack shaft 4 is inserted through the rack housing 5 in a reciprocable manner. The rack and pinion mechanism 6 converts rotation of the steering shaft 3 into reciprocating motion of the rack shaft 4. The steering shaft 3 includes a column shaft 7, an intermediate shaft 8, and a pinion shaft 9 in this order from a side where the steering wheel 2 is located.

The rack shaft 4 and the pinion shaft 9 are arranged in the rack housing 5 at a predetermined crossing angle. A rack teeth provided on the rack shaft 4 mesh with pinion teeth provided on the pinion shaft 9, and that, the rack and pinion mechanism 6 is constructed. Knuckles are coupled to respective ends of the rack shaft 4 through tie rods (not illustrated). Steered wheels are attached to the knuckles. In the steering system 1, rotation of the steering shaft 3 along with a steering operation is converted into axial movement of the rack shaft 4. The axial movement is transmitted to the knuckles through the tie rods. Thus, the steered angle of each of the steered wheels (that is, a traveling direction of a vehicle) is changed.

The rack housing 5 includes a housing body 11 having a cylindrical shape, and a tubular portion 12 having a cylindrical shape. The housing body 11 extends in an axial direction of the rack shaft 4. The tubular portion 12 is provided integrally with the housing body 11, and extends in an axial direction of the pinion shaft 9. The rack housing 5 is made of a metal material such as aluminum. Attachment portions 14 are provided at respective ends of the housing body 11, respectively. The attachment portions 14 include through holes 13 extending in a vertical direction of the vehicle. The pinion shaft 9 protrudes from the tubular portion 12, is inserted through a through hole (not illustrated) of a dash panel D to extend into a cabin located on an inner side of the dash panel D, and is coupled to the intermediate shaft 8.

A hole cover 15 is attached to the tubular portion 12. The hole cover 15 covers the pinion shaft 9 between the tubular portion 12 and the dash panel D, and covers the through hole of the dash panel D. A seal member (not illustrated) is interposed between the hole cover 15 and the dash panel D. The steering system 1 is mounted on the vehicle in a state in which the rack housing 5 is pressed against the dash panel D of the vehicle through the hole cover 15 by a predetermined load such that the rack housing 5 is coupled to suspension members of the vehicle through bolts (not illustrated) inserted through the through holes 13. The predetermined load is determined in advance depending on specifications of the vehicle or the like, and is set to, for example, about several hundreds of newtons.

Next, the structures of the tubular portion 12 and the hole cover 15 are described. For convenience of description, a first axial side refers to a vehicle top side of the steering system 1 in a state in which the steering system 1 is mounted on the vehicle, and a second axial side refers to a vehicle bottom side of the steering system 1 in this state.

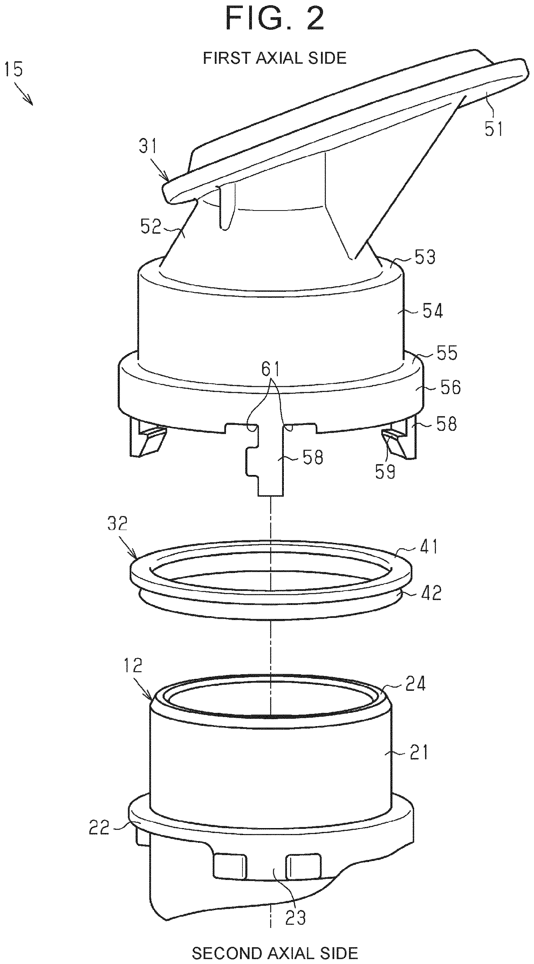

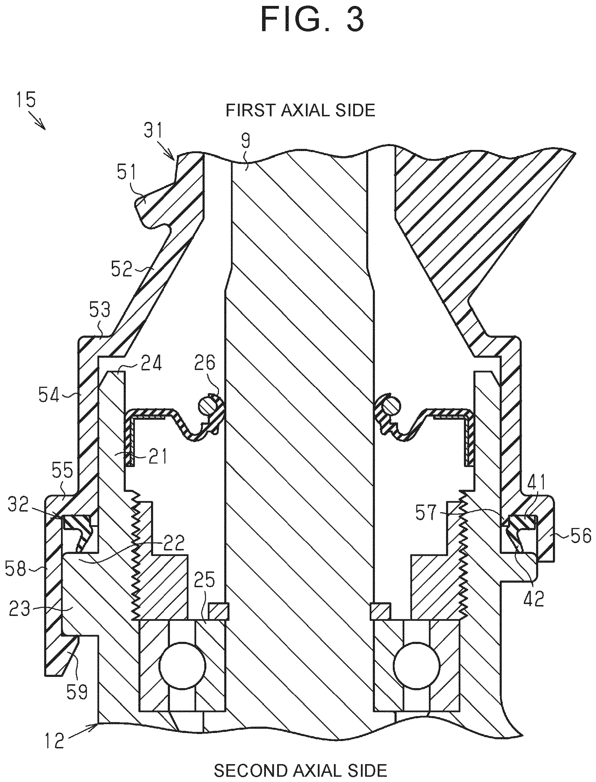

As illustrated in FIG. 2 and FIG. 3, the tubular portion 12 includes a tubular housing-side fitting portion 21, a ring-shaped housing-side interposing portion 22, and a plurality of engaged portions 23. The housing-side fitting portion 21 is open to the first axial side. The housing-side interposing portion 22 extends outward in a radial direction from a second axial portion of the housing-side fitting portion 21. The engaged portions 23 extend to the second axial side from predetermined areas in a circumferential direction of the housing-side interposing portion 22. The open end of the housing-side fitting portion 21 serves as a housing-side regulating portion 24 having a flat end face over the entire circumference. The outer peripheral surface of the housing-side interposing portion 22 and the outer peripheral surface of the engaged portion 23 are formed flush with each other. A bearing 25 is fixed to the inner periphery of the tubular portion 12 to rotatably support the pinion shaft 9. A seal member 26 is fixed at a position closer to the first axial side than the bearing 25 is.

The hole cover 15 includes a tubular fitting member 31 and an annular seal member 32. The fitting member 31 is fitted to the tubular portion 12. The seal member 32 is disposed radially inward of the fitting member 31. The seal member 32 is made of a rubber material. The seal member 32 includes a ring-shaped base 41 and a lip 42 extending to the second axial side from the base 41.

The fitting member 31 is made of a resin material. The fitting member 31 includes a flange 51, a tapered tube 52, a ring-shaped cover-side regulating portion 53, and a cylindrical cover-side fitting portion 54. The flange 51 has an oval shape when viewed in the axial direction. The tapered tube 52 extends to the second axial side from the flange 51. The cover-side regulating portion 53 extends outward in the radial direction from a second axial portion of the tapered tube 52. The cover-side fitting portion 54 extends to the second axial side from an outer peripheral edge of the cover-side regulating portion 53. The flange 51 is inclined in a direction intersecting the axial direction of the pinion shaft 9 depending on the crossing angle between the rack shaft 4 and the pinion shaft 9. The tapered tube 52 is formed such that its axis is parallel to the pinion shaft 9 and its bore and outside diameters increase toward the second axial side. The bore diameter of the cover-side regulating portion 53 is set substantially equal to the bore diameter of the housing-side fitting portion 21. As illustrated in FIG. 3, the cover-side regulating portion 53 is, as described later, spaced away from the housing-side regulating portion 24 in a state in which the fitting of the hole cover 15 to the tubular portion 12 is completed and in a state before the steering system 1 is mounted on the vehicle, that is, in a state before the rack housing 5 is pressed against the dash panel D through the fitting member 31 by the predetermined load. The bore diameter of the cover-side fitting portion 54 is set slightly larger than the outside diameter of the housing-side fitting portion 21. The inner periphery of the cover-side fitting portion 54 is fitted to the outer periphery of the housing-side fitting portion 21 by clearance fit.

The fitting member 31 includes a ring-shaped cover-side interposing portion 55, a cylindrical covering portion 56, and a ring-shaped wall 57. The cover-side interposing portion 55 extends outward in the radial direction from a second axial portion of the cover-side fitting portion 54. The covering portion 56 extends to the second axial side from the outer peripheral edge of the cover-side interposing portion 55 in the radial direction. The wall 57 extends to the second axial side from the inner peripheral edge of the cover-side interposing portion 55 in the radial direction. The fitting member 31 further includes a plurality of arms 58 extending to the second axial side from the covering portion 56. The fitting member 31 of this embodiment is provided with three arms 58 at intervals in a circumferential direction of the covering portion 56.

The cover-side interposing portion 55 interposes the seal member 32 in the axial direction between the cover-side interposing portion 55 and the housing-side interposing portion 22. The bore diameter of the covering portion 56 is set slightly larger than the outside diameter of the housing-side interposing portion 22. The inner periphery of the covering portion 56 is fitted to the outer periphery of the housing-side interposing portion 22 by clearance fit. The bore diameter of the wall 57 is set substantially equal to the bore diameter of the cover-side fitting portion 54. The outside diameter of the wall 57 is set substantially equal to the bore diameter of the base 41 of the seal member 32. The axial length of the wall 57 is set slightly smaller than the axial length of the base 41 of the seal member 32. The wall 57 prevents misalignment of the seal member 32 disposed radially inward of the covering portion 56. Each arm 58 is provided in a shape of a rectangular plate extending to the second axial side from the covering portion 56 at a position corresponding to each engaged portion 23. A claw 59 is provided at a second axial portion of each arm 58 to protrude inward in the radial direction. Each claw 59 is provided in a triangular shape in cross section in which the protrusion amount gradually decreases from the first axial side to the second axial side.

In the fitting member 31 of the hole cover 15 constructed as described above, the cover-side fitting portion 54 is fitted to the outer periphery of the housing-side fitting portion 21 by clearance fit, and the covering portion 56 is fitted to the outer periphery of the housing-side interposing portion 22 by clearance fit. The fitting of the fitting member 31 to the tubular portion 12 is completed when a fitting length, which is the length of a part of the cover-side fitting portion 54 that is fitted to the housing-side fitting portion 21, is a predetermined fitting length. In the state in which the fitting of the fitting member 31 to the tubular portion 12 is completed, the covering portion 56 is fitted to the outer periphery of the housing-side interposing portion 22, and the claws 59 engage with the engaged portions 23. Thus, the fitting member 31 is fitted to the tubular portion 12, and the hole cover 15 is attached to the rack housing 5. The state in which the fitting of the fitting member 31 to the tubular portion 12 is completed may be regarded as a state in which the seal member 32 is in contact with both the housing-side interposing portion 22 and the cover-side interposing portion 55 and is interposed therebetween.

Then, the steering system 1 is mounted on the vehicle, and the rack housing 5 to which the hole cover 15 is attached is pressed against the dash panel D through the fitting member 31 by the predetermined load. Then, the housing-side regulating portion 24 abuts against the cover-side regulating portion 53, and the seal member 32 is compressed by a predetermined amount between the housing-side interposing portion 22 and the cover-side interposing portion 55. Thus, a part between the tubular portion 12 and the hole cover 15 is sealed. The predetermined amount is defined in advance based on, for example, results of experiments as an amount that does not cause excessive compression to the extent that deterioration of the seal member 32 is accelerated, while sufficiently securing the sealing performance between the tubular portion 12 and the hole cover 15.

When the hole cover 15 is attached to the tubular portion 12, there is a possibility that the seal member 32 is not interposed between the housing-side interposing portion 22 and the cover-side interposing portion 55, for example, because a part of the seal member 32 is curled up. Therefore, it is preferable to check whether the seal member 32 is properly attached in the state in which the hole cover 15 is attached to the tubular portion 12.

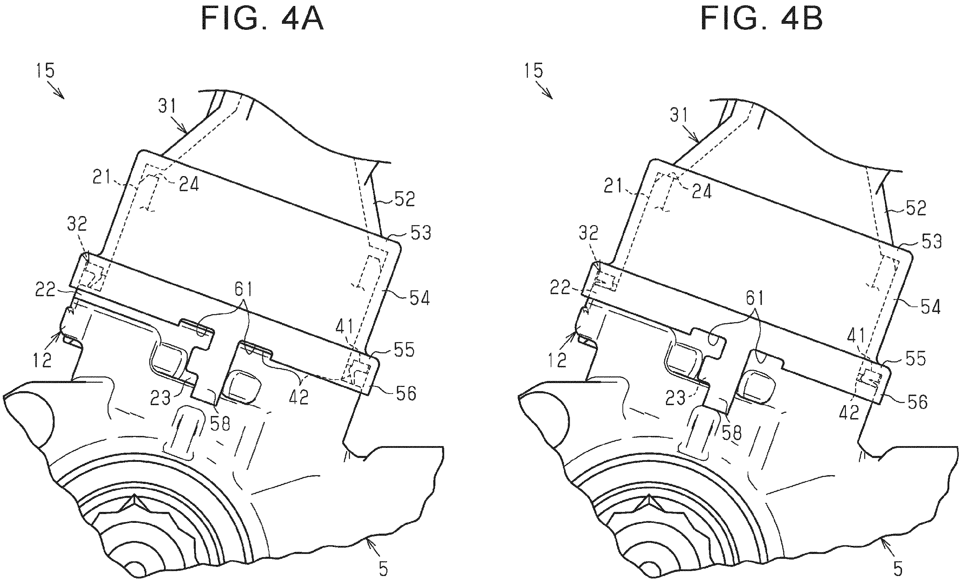

As illustrated in FIG. 4A and FIG. 4B, the covering portion 56 of this embodiment is provided with openings 61 passing in and out through the covering portion 56. The openings 61 are provided adjacent to respective sides of each arm 58 in the circumferential direction. That is, the covering portion 56 is provided with six openings 61. Each opening 61 is located at a second axial portion of the covering portion 56, and is provided in a shape of a rectangular cutout that is open to the second axial side. As illustrated in FIG. 4A, each opening 61 is provided so that the seal member 32 is exposed to the outside through the opening 61 in a state in which the attachment of the fitting member 31 to the tubular portion 12 before the steering system 1 is mounted on the vehicle is completed and the steering system 1 is not mounted on the vehicle. That is, each opening 61 is provided so that the seal member 32 is exposed to the outside through the opening 61 in a state in which the attachment of the fitting member 31 to the tubular portion 12 before the steering system 1 is mounted on the vehicle is completed and a load smaller than a load to be applied to the seal member 32 when the rack housing 5 is pressed against the dash panel D through the fitting member 31 by the predetermined load is applied to the seal member 32. As illustrated in FIG. 4B, each opening 61 is provided so that the seal member 32 is hidden by the inner periphery of the covering portion 56 in a state in which the rack housing 5 to which the hole cover 15 is attached is mounted on the vehicle and is pressed against the dash panel D through the fitting member 31 by the predetermined load. In other words, the axial length of each opening 61 is set so that the seal member 32 is exposed while being hardly compressed except for compression caused by influence of the self-weight of the hole cover 15 and is hidden by the inner periphery of the covering portion 56 while being compressed by a load applied when the steering system 1 is mounted on the vehicle.

Next, actions and effects of this embodiment are described. The covering portion 56 of the fitting member 31 is provided with the openings 61 passing in and out through the covering portion 56, and the openings 61 are provided so that the seal member 32 is exposed to the outside in the state in which the fitting of the fitting member 31 to the tubular portion 12 is completed and the steering system 1 is not mounted on the vehicle. Therefore, the seal member 32 is visible from the outside through the openings 61 in the state in which the fitting member 31 of the hole cover 15 is fitted to the tubular portion 12 of the rack housing 5 before the steering system 1 is mounted on the vehicle. Thus, it is possible to easily check whether the seal member 32 is properly attached.

The openings 61 are provided so that the seal member 32 is hidden by the inner periphery of the covering portion 56 in the state in which the rack housing 5 to which the hole cover 15 is attached is mounted on the vehicle and is pressed against the dash panel D through the fitting member 31 by the predetermined load. Therefore, the seal member 32 is not exposed to the outside through the openings 61 after the steering system 1 is mounted on the vehicle. Thus, the sealing performance can be improved by suppressing direct adhesion of foreign matter such as rain water or dust to the seal member 32 through the openings 61.

The fitting member 31 includes the arms 58 extending in the axial direction from the covering portion 56, and the claws 59 engageable with the engaged portions 23 of the tubular portion 12 are provided at the distal ends of the arms 58. The claws 59 engage with the engaged portions 23 in the state in which the fitting of the fitting member 31 to the tubular portion 12 is completed and the steering system 1 is not mounted on the vehicle. Therefore, it is possible to reduce the occurrence of a case where the hole cover 15 detaches from the rack housing 5, for example, during transportation of the rack housing 5 to which the hole cover 15 is attached.

The openings 61 are provided adjacent to each arm 58 in the circumferential direction. Therefore, a part of the covering portion 56 near the root of the arm 58 is easily deflected unlike, for example, a case where the openings 61 are provided away from the arm 58. That is, an apparent axial length of the arm 58 increases, and therefore the arm 58 can easily be deflected when the fitting member 31 is fitted to the tubular portion 12. Thus, easiness of attachment of the hole cover 15 can be improved.

The plurality of openings 61 are provided at intervals in the circumferential direction. Therefore, a plurality of parts of the seal member 32 are visible. Thus, it is possible to more accurately check whether the seal member 32 is properly attached.

This embodiment may be modified as follows. This embodiment and the following modified examples may be combined without causing any technical contradiction. In the embodiment described above, for example, the lip 42 may be omitted from the seal member 32, and various shapes may be employed for the seal member 32.

In the embodiment described above, each opening 61 is provided in the shape of the rectangular cutout that is open to the second axial side, but the shape of the opening 61 may be changed as appropriate. For example, the opening 61 may have a shape of a semicircular cutout, or a shape of a hole that is not open to the second axial side.

In the embodiment described above, the openings 61 may be provided away from the arm 58 in the circumferential direction. In this case, at least one of the plurality of openings 61 may be provided adjacent to the arm 58 in the circumferential direction, and at least one other opening 61 out of the plurality of openings 61 may be provided away from the arm 58 in the circumferential direction.

In the embodiment described above, the number of openings 61 may be changed as appropriate. The covering portion 56 may be provided with one opening 61. In the embodiment described above, the number of arms 58 may be changed as appropriate. The arms 58 may be omitted.

In the embodiment described above, the openings 61 may be provided so that the seal member 32 is exposed to the outside through the openings 61 in the state in which the rack housing 5 to which the hole cover 15 is attached is mounted on the vehicle and is pressed against the dash panel D through the fitting member 31 by the predetermined load.

In the embodiment described above, the fitting member 31 may be provided so that the covering portion 56 is not fitted to the outer periphery of the housing-side interposing portion 22, that is, an axial clearance is present between the second axial portion of the covering portion 56 and the housing-side interposing portion 22 in the state in which the fitting of the fitting member 31 to the tubular portion 12 is completed. In this case, the covering portion 56 is fitted to the outer periphery of the housing-side interposing portion 22 after the steering system 1 is mounted on the vehicle.

## Claims

1. A hole cover (15) comprising:
a tubular fitting member (31), to be fitted to a tubular portion (12) of a rack housing (5) which houses a pinion shaft (9) which partially protrudes from the tubular portion (12), the hole cover (12), when fitted, covering the pinion shaft (9) and a through hole of a dash panel (D) of a vehicle, the pinion shaft being inserted through the through hole; and
an annular seal member (32) disposed radially inward of the tubular fitting member (31), wherein
the tubular fitting member (31) includes:
a cover-side fitting portion (54) to be fitted to an outer periphery of a tubular housing-side fitting portion (21) provided on the tubular portion (12);
a cover-side interposing portion (55) configured to interpose the annular seal member (32) in an axial direction between the cover-side interposing portion (55) and a housing-side interposing portion (22) provided on the tubular portion (12); and
a covering portion (56) that covers an outer periphery of the annular seal member (32), and wherein
the covering portion (56) is provided with an opening (61) passing in and out through the covering portion (56),**characterized in that,**
the opening (61) is provided so that the annular seal member (32) is exposed to an outside in a state in which the fitting of the tubular fitting member (31) to the tubular portion (12) is completed, namely when a fitting length, which is a length of a part of the cover-side fitting portion (54) that is fitted to the tubular housing-side fitting portion (21), is a predetermined fitting length, and in a state in which the rack housing (5) is not mounted on a vehicle.

2. The hole cover (15) according to claim 1, wherein the opening (61) is provided so that the annular seal member (32) is hidden by an inner periphery of the covering portion (56) in a state in which the rack housing (5) to which the hole cover (15) is attached is mounted on the vehicle and is pressed against the dash panel of the vehicle through the tubular fitting member (31) by a predetermined load.

3. The hole cover (15) according to claim 1 or 2, wherein:
the tubular fitting member (31) includes an arm (58) extending in the axial direction from the covering portion (56);
a claw (59) engageable with an engaged portion provided on the tubular portion (12) is provided at a distal end of the arm (58); and
the claw (59) engages with the engaged portion in the state in which the fitting of the tubular fitting member (31) to the tubular portion (12) is completed and in the state in which the rack housing (5) is not mounted on the vehicle.

4. The hole cover (15) according to claim 3, wherein the opening (61) is provided adjacent to the arm (58) in a circumferential direction.

5. The hole cover (15) according to any one of claims 1 to 4, wherein a plurality of the openings (61) are provided at intervals in a circumferential direction.

6. A steering system comprising:
a rack housing (5) including a tubular portion (12), which houses a pinion shaft (9) such that the pinion shaft (9) partially protrudes from the tubular portion (12); and
the hole cover (15) according to any one of claims 1 to 5, which is fitted to the tubular portion (12), wherein
the steering system is mounted on the vehicle in a state in which the rack housing (5) is pressed against the dash panel of the vehicle through the tubular fitting member (31) by a predetermined load.

## Patentansprüche

1. Lochabdeckung (15) mit
einem röhrenförmigen Passelement (31), das an einem röhrenförmigen Abschnitt (12) eines Zahnstangengehäuses (5) anzubringen ist, das eine Ritzelwelle (9) unterbringt, die teilweise aus dem röhrenförmigen Abschnitt (12) herausragt, wobei die Lochabdeckung (15), wenn sie angebracht ist, die Ritzelwelle (9) und ein Durchgangsloch eines Armaturenbretts (D) eines Fahrzeugs abdeckt, wobei die Ritzelwelle durch das Durchgangsloch eingeführt wird; und
einem ringförmigen Dichtungselement (32), das radial innerhalb des röhrenförmigen Passelements (31) angeordnet ist, wobei
das röhrenförmige Passelement (31)
einen deckelseitigen Passabschnitt (54), der an einem Außenumfang eines röhrenförmigen gehäuseseitigen Passabschnitts (21) anzubringen ist, der an dem röhrenförmigen Abschnitt (12) vorgesehen ist;
einen deckelseitigen Zwischenabschnitt (55), der so konfiguriert ist, dass er das ringförmige Dichtungselement (32) in einer axialen Richtung zwischen dem deckelseitigen Zwischenabschnitt (55) und einem gehäuseseitigen Zwischenabschnitt (22), der an dem röhrenförmigen Abschnitt (12) vorgesehen ist, anordnet; und
einen Abdeckungsabschnitt (56) enthält, der einen Außenumfang des ringförmigen Dichtungselements (32) abdeckt, und wobei
der Abdeckungsabschnitt (56) mit einer Öffnung (61) versehen ist, die durch den Abdeckungsabschnitt (56) nach innen und nach außen durchgeht, **dadurch gekennzeichnet, dass**,
die Öffnung (61) so vorgesehen ist, dass das ringförmige Dichtungselement (32) in einem Zustand, in dem ein Anbringen des röhrenförmigen Passelements (31) an dem röhrenförmigen Abschnitt (12) abgeschlossen ist, nämlich wenn eine Passlänge, die eine Länge eines Teils des deckelseitigen Passabschnitts (54) ist, der an dem röhrenförmigen gehäuseseitigen Passabschnitt (21) angebracht ist, eine vorbestimmte Passlänge ist, und in einem Zustand, in dem das Zahnstangengehäuse (5) nicht an einem Fahrzeug montiert ist, nach außen freiliegt.

2. Lochabdeckung (15) nach Anspruch 1, wobei die Öffnung (61) so vorgesehen ist, dass das ringförmige Dichtungselement (32) durch einen inneren Umfang des Abdeckungsabschnitts (56) in einem Zustand verdeckt ist, in dem das Zahnstangengehäuse (5), an dem die Lochabdeckung (15) angebracht ist, an dem Fahrzeug montiert ist und durch eine vorbestimmte Last über das röhrenförmige Passelement (31) gegen das Armaturenbrett des Fahrzeugs gedrückt wird.

3. Lochabdeckung (15) nach Anspruch 1 oder 2, wobei:
das röhrenförmige Passelement (31) einen Arm (58) enthält, der sich in der axialen Richtung von dem Abdeckungsabschnitt (56) erstreckt;
eine Klaue (59), die mit einem an dem röhrenförmigen Abschnitt (12) vorgesehenen Eingriffsabschnitt in Eingriff gebracht werden kann, an einem distalen Ende des Arms (58) vorgesehen ist; und
die Klaue (59) in dem Zustand, in dem das Anbringen des röhrenförmigen Passelements (31) an dem röhrenförmigen Abschnitt (12) abgeschlossen ist, und in dem Zustand, in dem das Zahnstangengehäuse (5) nicht an dem Fahrzeug montiert ist, mit dem Eingriffsabschnitt in Eingriff steht.

4. Lochabdeckung (15) nach Anspruch 3, wobei die Öffnung (61) in einer Umfangsrichtung benachbart zu dem Arm (58) vorgesehen ist.

5. Lochabdeckung (15) nach einem der Ansprüche 1 bis 4, wobei eine Mehrzahl von Öffnungen (61) in einer Umfangsrichtung in Abständen vorgesehen ist.

6. Lenksystem mit
einem Zahnstangengehäuse (5) mit einem röhrenförmigen Abschnitt (12), der eine Ritzelwelle (9) derart unterbringt, dass die Ritzelwelle (9) teilweise aus dem röhrenförmigen Abschnitt (12) herausragt; und
der Lochabdeckung (15) nach einem der Ansprüche 1 bis 5, die an dem röhrenförmigen Abschnitt (12) angebracht ist, wobei
das Lenksystem an dem Fahrzeug in einem Zustand montiert ist, in dem das Zahnstangengehäuse (5) durch eine vorbestimmte Last über das röhrenförmige Passelement (31) gegen das Armaturenbrett des Fahrzeugs gedrückt wird.

## Revendications

1. Couvercle de trou (15) comprenant :
un élément de montage tubulaire (31), devant être monté sur une partie tubulaire (12) d'un boîtier de crémaillère (5) qui renferme un arbre de pignon (9) qui dépasse partiellement de la partie tubulaire (12), le couvercle de trou (12), lorsqu'il est monté, recouvrant l'arbre de pignon (9) et un trou traversant d'un tableau de bord (D) d'un véhicule, l'arbre de pignon étant inséré à travers le trou traversant ; et
un élément de joint annulaire (32) disposé radialement vers l'intérieur de l'élément de montage tubulaire (31),dans lequel
l'élément de montage tubulaire (31) comprenant :
une partie de montage du côté couvercle (54) devant être montée sur une périphérie extérieure d'une partie de montage du côté boîtier tubulaire (21) prévue sur la partie tubulaire (12) ;
une partie d'interposition du côté couvercle (55) configurée pour interposer l'élément de joint annulaire (32) dans une direction axiale entre la partie d'interposition du côté couvercle (55) et une partie d'interposition du côté boîtier (22) prévue sur la partie tubulaire (12) ; et
une partie de recouvrement (56) qui recouvre une périphérie extérieure de l'élément de joint annulaire (32), et dans lequel
la partie de recouvrement (56) étant pourvue d'une ouverture (61) qui passe dedans et dehors à travers la partie de recouvrement (56), **caractérisé en ce que**,
l'ouverture (61) est prévue de telle sorte que l'élément de joint annulaire (32) est exposé à un extérieur dans un état dans lequel le montage de l'élément de montage tubulaire (31) sur la partie tubulaire (12) est terminé, à savoir que
quand une longueur de montage, qui est une longueur d'une partie de la partie de montage du côté couvercle (54) qui est montée sur la partie de montage du côté logement tubulaire (21), est une longueur de montage prédéterminée,
et dans un état dans lequel le boîtier de crémaillère (5) n'est pas monté sur un véhicule.

2. Couvercle de trou (15) selon la revendication 1, dans lequel l'ouverture (61) est prévue de telle sorte que l'élément de joint annulaire (32) est caché par une périphérie intérieure de la partie de recouvrement (56) dans un état dans lequel le boîtier de crémaillère (5) sur lequel le couvercle de trou (15) est fixé est monté sur le véhicule et est pressé contre le tableau de bord du véhicule par l'intermédiaire de l'élément de montage tubulaire (31) grâce à une charge prédéterminée.

3. Couvercle de trou (15) selon la revendication 1 ou 2, dans lequel :
l'élément de montage tubulaire (31) comprend un bras (58) s'étendant dans la direction axiale depuis la partie de recouvrement (56) ;
une griffe (59) pouvant être engagée avec une partie engagée prévue sur la partie tubulaire (12) est prévue au niveau d'une extrémité distale du bras (58) ; et
la griffe (59) engage la partie engagée dans l'état dans lequel le montage de l'élément de montage tubulaire (31) sur la partie tubulaire (12) est terminé et dans l'état dans lequel le boîtier de crémaillère (5) n'est pas monté sur le véhicule.

4. Couvercle de trou (15) selon la revendication 3, dans lequel l'ouverture (61) est prévue de façon adjacente au bras (58) dans une direction circonférentielle.

5. Couvercle de trou (15) selon l'une quelconque des revendications 1 à 4, dans lequel une pluralité d'ouvertures (61) est prévue avec des intervalles dans une direction circonférentielle.

6. Système de direction comprenant :
un boîtier de crémaillère (5) comprenant une partie tubulaire (12), qui renferme un arbre de pignon (9) de telle sorte que l'arbre de pignon (9) dépasse partiellement de la partie tubulaire (12) ; et
le couvercle de trou (15) selon l'une quelconque des revendications 1 à 5, qui est monté sur la partie tubulaire (12), dans lequel
le système de direction étant monté sur le véhicule dans un état dans lequel le boîtier de crémaillère (5) est pressé contre le tableau de bord du véhicule par l'intermédiaire de l'élément de montage tubulaire (31) grâce à une charge prédéterminée.
